# EUROPÄISCHE PATENTSCHRIFT

(11) **EP 0 529 229 B1**
(45) Veröffentlichungstag und Bekanntmachung des Hinweises auf die Patenterteilung: **29.11.1995**
(21) Anmeldenummer: 92110678.7
(22) Anmeldetag: 25.06.1992
(51) Int. Cl.: F16B 13/12

(54) **Dübel**
Wall plugs
Chevilles murales

(30) Priorität: 27.08.1991 DE 9110499 U
(43) Veröffentlichungstag der Anmeldung: 03.03.1993
(73) Patentinhaber: EJOT Kunststofftechnik GmbH & Co. KG, D-57319 Bad Berleburg (DE)
(72) Erfinder: Riecke, Ernst Hermann, Dipl.-Ing., W-5920 Bad Berleburg 4 (DE)
(74) Vertreter: Missling, Arne, Dipl.-Ing.

(56) Entgegenhaltungen:
- DE-U- 8 710 681
- FR-A- 2 089 667
- FR-A- 2 530 746
- FR-A- 2 534 987

## Beschreibung

Die Erfindung bezieht sich auf einen Dübel nach dem Oberbegriff des Anspruches 1.

Dübel werden für vielfältige Verwendungszwecke und in den unterschiedlichsten Ausführungsformen benötigt. Das Grundprinzip jedes Dübels besteht darin, daß dieser einen spreizbaren Endbereich aufweist, welcher in einer Bohrung, beispielsweise eines Mauerwerks angeordnet ist. Durch das Einbringen eines Spreizelements, beispielsweise eines Bolzens, einer Schraube o. ä. wird der Endbereich des Dübels gespreizt. Der zur Befestigung dienende Kopf des Dübels ist über ein im wesentlichen zylindrisches Rohr mit dem spreizbaren Endbereich verbunden. Der Innendurchmesser des Rohres ist so bemessen, daß das Spreizelement im wesentlichen frei durch das Rohr durchschiebbar ist, während der Innendurchmesser des spreizbaren Endbereichs im nicht gespreizten Zustand kleiner ist, als der Außendurchmesser des Spreizelements. Die mögliche Spreizwirkung ergibt sich somit aus der Differenz des Durchmessers des Spreizelements und dem Innendurchmesser des spreizbaren Endbereichs im nicht gespreizten Zustand. Bei einem Normdübel von 8 mm Durchmesser ergeben sich, bedingt durch die geringen Durchmesserunterschiede, sehr kleine Spreizbereiche zwischen 2,2 und 3,2 mm. Diese Spreizung kann bei Einbringen des Dübels in eine Bohrung in einen Betonwerkstoff ausreichend sein, bei Mauerwerken aus Hohlkammerbausteinen oder Gasbeton besteht jedoch die Möglichkeit, daß die Spreizwirkung nicht ausreicht, um den Dübel sicher zu verankern.

Ein Dübel der eingangs näher bezeichneten Form, wie er aus der Druckschrift DE-U-87 10 681 bzw. FR-A-2 530 746 bereits bekannt ist, ist hingegen in der Lage, wesentlich größere Spreizbereiche zu realisieren und dafür zu sorgen, daß die Keilelemente in das Mauerwerk eingespreizt werden, sei es in Hohlräume oder durch Verdrängen von Bauwerkstoff, so daß eine große Haltekraft des Dübels die Folge ist. Allerdings kann bei den erforderlichen Schlitzen (DE 87 10 681 U1) für die Keilelemente die Gefahr der Rißbildung und des Abrisses des jeweiligen Keilelementes nicht ausgeschlossen werden, weil in dem Endzwickel des jeweiligen Schlitzes bei der Herstellung des Dübels Risse und an der gleichen Stelle auch erhebliche, aus der Haftreibung am Mauerwerk resultierende abscherende Kräfte auftreten können, wenn der Dübel in das Mauerwerk eingeschlagen wird. Die bekannten Dübel haben jedoch nur relativ kleine vorspringende Flächen, so daß deren Haltekraft relativ beschränkt ist. Darüber hinaus erfordern diese Dübel paßgenaue Bohrungen und können auch nur bei festeren Untergründen eingesetzt werden.

Der Erfindung liegt die Aufgabe zugrunde, einen Dübel der eingangs genannten Art zu schaffen, welcher bei einfachem Aufbau, einfacher Herstellbarkeit und leichter Anwendbarkeit eine wesentlich größere Spreizwirkung mit entsprechend größeren Halteflächen und damit größerer Haltekraft aufweist und auch in Mauerwerk mit Hohlräumen oder Poren sicher verankert werden kann.

Die Aufgabe wird erfindungsgemäß mit den Merkmalen des Anspruches 1 gelöst.

Der erfindungsgemäße Dübel zeichnet sich durch eine Reihe erheblicher Vorteile aus. Erfindungsgemäß kann durch die eingeschwenkten Keilelemente der freie Innendurchmesser des spreizbaren Endbereiches gegen Null verringert werden, so daß beim Eindringen des Spreizelementes in den spreizbaren Endbereich des Dübels das Maß der Spreizung im wesentlichen dem Durchmesser des Spreizelementes entspricht. Die Bohrung, in welcher der Dübel eingebracht wird, kann deshalb im wesentlichen gleich dimensioniert werden, wie der Außendurchmesser des Rohres, die Keilelemente werden beim Einbringen des Dübels vollständig in den freien Innenraum des Rohres verschwenkt. Bei einem Normdübel mit 8 mm Durchmesser ist dadurch beispielsweise eine Spreizung von 5,2 mm zu erzielen. Diese Spreizung ist weitaus stärker, als bei sämtlichen vorbekannten Dübeln.

Da die einzelnen Keilelemente jeweils in einer separaten Ausnehmung angeordnet sind, ist das Dübelrohr selbst, insbesondere jedoch dessen spreizbarer Bereich, sehr stabil ausgebildet, so daß der erfindungsgemäße Dübel auch bei geringem Durchmesser eine sehr große Länge aufweisen kann. Ein weiterer, wesentlicher Vorteil des Dübels besteht darin, daß das Spreizelement nicht seitlich aus dem Dübel austreten kann, so wie dies bei herkömmlichen, im wesentlichen in Längsrichtung geschlitzten Dübeln der Fall ist. Insbesondere bei verlaufenden Bohrungen ist somit gewährleistet, daß der Dübel sicher in dem Mauerwerk verankert wird.

Die Ausnehmungen sind jeweils, bezogen auf die Längsachse des Rohrs, gegeneinander versetzt angeordnet. Diese Ausgestaltungsform verhindert, daß die Keilelemente sich gegenseitig behindern, wenn sie innerhalb der Außenkontur des Rohrs in dieses eingeschwenkt sind. Weiterhin erhöht sich die Stabilität des spreizbaren Bereichs des Dübels.

Das Keilelement ist über ein Scharnierelement an dem Rohr gelagert, wobei das Keilelement, ebenso wie der Dübel aus einem Kunststoffmaterial gefertigt sein können. Das Keilelement ist dabei einstückig mit dem Dübel ausgebildet, wobei der Scharnierbereich über einen verringerten Querschnitt realisiert wird.

In bevorzugter Weise sind die Keilelemente jeweils, bezogen auf eine die Längsachse des Rohrs umfassende Ebene, dreieckförmig ausgebildet, die Breite der Keilelemente, welche als dreieckige Platte ausgestaltet sind, hängt von dem Durchmesser des Dübels ab. Durch diese Ausbildung der Keilelemente erfolgt, insbesondere beim Einsetzen in Hohlkammerbausteine oder in Gasbeton eine Belastung der Keilelemente senkrecht zur Dübelachse. Es erfolgt hierdurch eine formschlüssige Verankerung des Dübels, welche, verglichen mit der üblichen kraftschlüssigen Verankerung, erhebliche Vorteile bildet.

Im ausgespreizten Zustand weist das Keilelement bevorzugterweise eine parallel zur Längsachse des Rohres angeordnete Innenfläche auf, welche sich gegen das Spreizelement abstützt. Weiterhin hat das Keilelement eine rechtwinklig zum Kopf des Dübels weisende obere Fläche sowie eine zur Längsachse geneigte Außenfläche. Die ober Fläche ist im eingeschwenkten Zustand des Keilelements zur Längsachse des Dübels geneigt, so daß die Spitze des Spreizelements das Keilelement beim Einbringen des Spreizelementes nach außen drückt. Die obere Fläche bewirkt eine Verrastung, welche ein Ausziehen des Dübels aus porösen Werkstoffen, beispielsweise Gasbeton oder Hohlkammerbausteinen durch die bereits erwähnte formschlüssige Halterung verhindert. Bei der beschriebenen Ausführungsform ist es günstig, wenn das Keilelement so mit dem Scharnierbereich verbunden ist, daß der Scharnierbereich zur Spitze bzw. zum freien Ende des Dübels angeordnet ist. Es sind jedoch auch andere Möglichkeiten gegeben, das Keilelement an dem Dübelrohr zu lagern, beispielsweise durch einen seitlich angeordneten Scharnierbereich.

Es kann erfindungsgemäß weiterhin günstig sein, wenn das Rohr zu dessen Spitze oder freiem Ende hin offen ist, so daß ein Spreizelement eingebracht werden kann, welches geringfügig länger ist, als der Dübel selbst. Durch das Einbringen des Spreizelements durch die mit einer Öffnung versehene Spitze des Rohres wird die Spitze des Dübels zusätzlich verformt, so daß auch hier, zusätzlich zu den Keilelementen, eine Verankerungswirkung eintritt.

Im folgenden wird die Erfindung anhand von Ausführungsbeispielen in Verbindung mit der Zeichnung beschrieben. Dabei zeigt:
- Fig. 1: eine Seitenansicht eines ersten Ausführungsbeispiels des erfindungsgemäßen Dübels, teils im Schnitt, im unmontierten Zustand,
- Fig. 2: eine Draufsicht auf den in Fig. 1 gezeigten Dübel,
- Fig. 3: eine Seitenansicht, ebenfalls im unmontierten Zustand, eines weiteren Ausführungsbeispiels des erfindungsgemäßen Dübels, ähnlich Fig. 1, wobei der Dübel einen vergrößerten Kopfbereich aufweist,
- Fig. 4: eine Draufsicht auf den in Fig. 3 gezeigten Dübel,
- Fig. 5: eine Seitenansicht, teils im Schnitt, des in Fig. 3 gezeigten Dübels im teilmontierten Zustand in einem Hohlkammerbaustein,
- Fig. 6: eine Seitenansicht, teils im Schnitt, ähnlich Fig. 5, wobei der Dübel durch Einbringen des Spreizelements vollständig montiert ist,
- Fig. 7: eine Seitenansicht, teils im Schnitt, des in Fig. 3 gezeigten Dübels im teilmontierten Zustand in einer Gasbetonwand, und
- Fig. 8: eine Seitenansicht, ähnlich Fig. 7, im vollständig montierten Zustand des Dübels in einer Gasbetonwand.

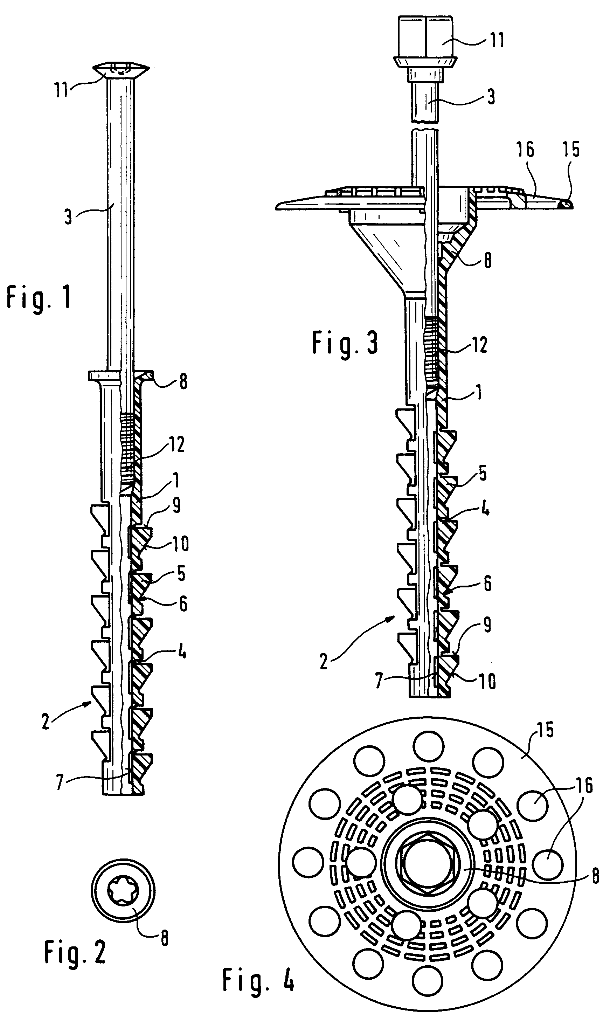

In Fig. 1 ist ein erstes Ausführungsbeispiel des erfindungsgemäßen Dübels dargestellt. Es ist zunächst darauf hinzuweisen, daß, wie bei einem Dübel üblich, ein Spreizelement 3 vorgesehen ist, welches in dem gezeigten Ausführungsbeispiel in Form einer Schraube ausgebildet ist und einen zentrischen Schaft aufweist, sowie einen vergrößerten Kopf 11 und eine Gewindespitze 12.

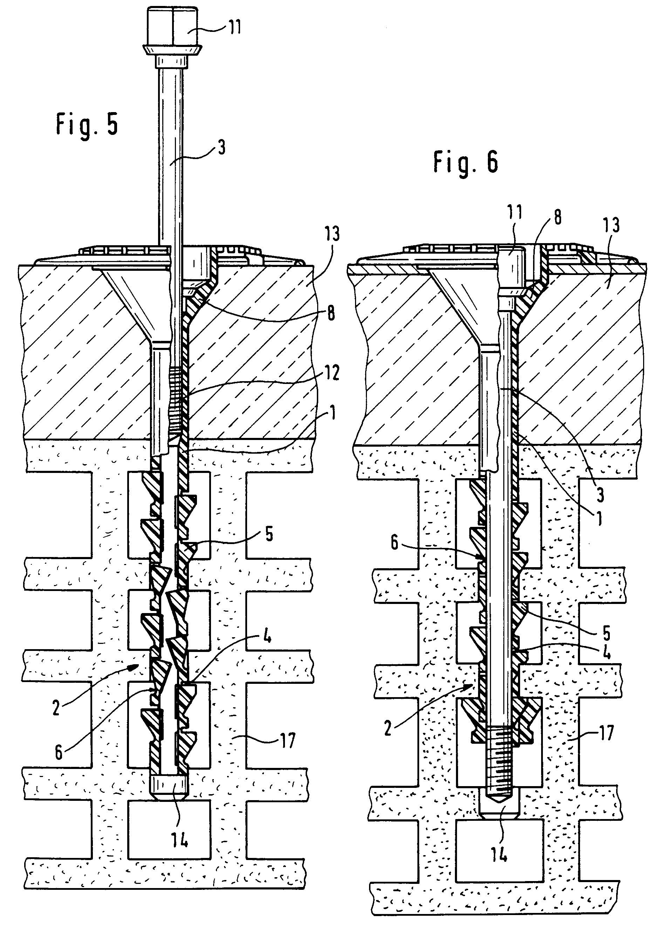

Der Dübel selbst umfaßt ein zylindrisches Rohr 1, dessen Innendurchmesser im wesentlichen dem Außendurchmesser des Spreizelements 3 entspricht. Das zylindrische Rohr 1 geht in einen spreizbaren Endbereich 2 über, welcher nachfolgend im einzelnen noch beschrieben werden wird. Die Länge des zylindrischen Rohrs 1 richtet sich nach den jeweiligen Anwendungszwecken, bei den in den Fig. 5 - 8 gezeigten Anwendungszwecken dient der Dübel zur Befestigung einer Isolierplatte 13. Die Länge des zylindrischen Rohrs entspricht somit im wesentlichen der Dicke der Isolierplatte 13. Wie üblich, weist der Dübel einen Kopf 8 auf, um eine Begrenzung beim Einschieben in eine Bohrung 14 eines Mauerwerks zu erzielen. Der Außendurchmesser des zylindrischen Rohrs 1 ist im wesentlichen gleich zu dem Innendurchmesser der Bohrung 14, wobei wie üblich Montagetoleranzen o. ä. vorzusehen sind.

Der Endbereich 2 des Dübels umfaßt eine Vielzahl von Ausnehmungen 4, in welchen jeweils ein Keilelement 5 angeordnet ist. Das Keilelement 5 ist einstückig mit dem Endbereich 2 ausgebildet und über einen Scharnierbereich 6 mit dem Dübel verbunden. Der Scharnierbereich 6 ist jeweils an der zum freien Ende des Dübels weisenden Kante der Ausnehmung 4 angeordnet, so wie dies aus den Abbildungen ersichtlich ist.

Jedes der Keilelemente 5 ist plattenförmig ausgebildet und weist eine, bezogen auf die Ebene der Mittelachse des Dübels, dreieckige Form auf.

Die Fig. 1 zeigt den Dübel im vormontierten Zustand, in welchem das Spreizelement 3 in das zylindrische Rohr 1 eingebracht ist. Die Keilelemente 5 befinden sich in dem Ausgangszustand, in welchem sie die gespreizte Stellung einnehmen. Diese Ausrichtung der Keilelemente 5 entspricht dem Herstellungs-Status, in welchem der Dübel mittels einer Kunststoff-Spritzform erzeugt wird. Es ist hierbei ersichtlich, daß jedes der dreieckigen Keilelemente 5 eine Innenfläche 7 aufweist, welche im gespreizten Zustand, wie in Fig. 1 gezeigt, parallel zur Wandung der Ausnehmung des zylindrischen Rohrs 1 ist. Angrenzend an die Innenfläche 7 ist eine rechtwinklig ausgerichtete Oberfläche 9 vorgesehen, die dritte Fläche des Keilelements 5 ist als schräge Außenfläche 10 ausgebildet. Es versteht sich, daß das Keilelement 5 an seiner Außenkontur abgerundet sein kann, um eine zylindrische Außenform zu erzeugen und um die Verschwenkung der Keilelemente 5 zu ermöglichen.

Die Fig. 2 zeigt eine Draufsicht auf den in Fig. 1 gezeigten Dübel.

In den Fig. 3 und 4 ist ein weiteres Ausführungsbeispiel dargestellt, welches sich hinsichtlich des Dübels darin unterscheidet, daß dieser an seinem Kopf 8 mit einer Platte 15 versehen ist, welche ein vergrößertes Widerlager bildet, um eine bessere Halterung einer Isolierplatte 13 zu gewährleisten. Die Platte 15 kann mit Ausnehmungen 16 versehen sein, welche einerseits zur Verstärkung der Platte 15 dienen und zum anderen ein Durchdringen mit einem Verputz ermöglichen, sofern auf die montierte Isolierplatte 13 eine Putzschicht aufgebracht wird. Die Ausgestaltung der Platte 15 entspricht dem Stand der Technik und braucht an dieser Stelle im einzelnen nicht erläutert werden. Im übrigen entspricht der restliche Aufbau des in Fig. 3 gezeigten Dübels dem Dübel gemäß Fig. 1, gleiche Teile sind mit gleichen Bezugsziffern versehen.

Die Fig. 5 und 6 zeigen im Schnitt jeweils in vereinfachter Darstellung einen Hohlkammerbaustein 17, in welchen die Bohrung 14 eingebracht ist. Weiterhin ist der erfindungsgemäße Dübel gemäß dem Ausführungsbeispiel der Fig. 3 und 4 durch die Isolierplatte 13 durchgesteckt und in die Bohrung 14 eingeschoben. Es ergibt sich hierbei, daß, bedingt durch die abgeschrägte Außenfläche 10 die Keilelemente 5 während des Einbringvorganges in die Bohrung 14 in den Innenraum des Dübels verschwenkt werden, so wie dies in Fig. 5 gezeigt ist. Die Keilelemente, welche nach dem Einschieben des Dübels in Hohlräumen des Hohlkammerbausteins 17 angeordnet sind, richten sich teilweise bereits selbst auf. Bei einem Einbringen des Spreizelements 3, so wie dies die Fig. 6 zeigt, werden die jeweiligen Keilelemente 5 nach außen gedrückt, wobei sie sich der jeweiligen Form der Hohlräume des Hohlkammerbausteins 17 anpassen. Überschüssiges Material fließt seitlich oder nach außen ab, so daß der Dübel insgesamt fest verankert wird. Hierbei ist es besonders wichtig, daß die Keilelemente 5 durch ein Hintergreifen der einzelnen Ausnehmungen des Hohlkammerbausteins zu einer formschlüssigen Verankerung führen.

Die Fig. 5 und 6 zeigen weiterhin, daß der Dübel zur Spitze hin offen ausgebildet ist, so daß das Spreizelement 3 mit seiner Gewindespitze 12 durch das Ende des Dübels durchtreten kann. Hierdurch wird ein Teil des Materials des Dübels verdrängt, so daß eine zusätzliche Verankerung des Dübels erfolgt.

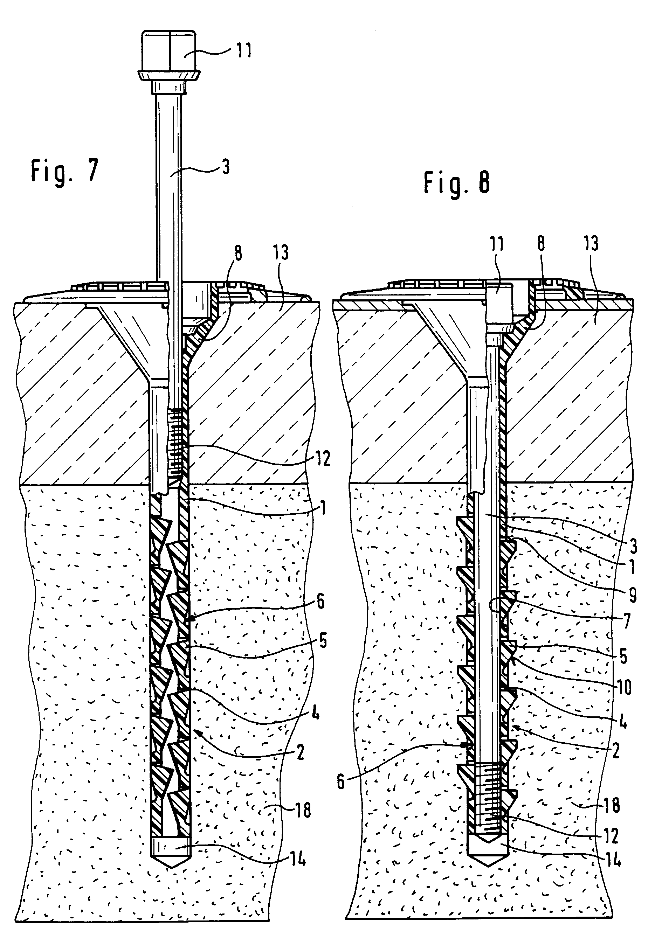

Die Fig. 7 und 8 entsprechen im wesentlichen den Fig. 5 und 6, sie unterscheiden sich nur hinsichtlich des Materials der Wandung, in welcher der Dübel eingebracht ist. Die Bohrung 14 ist hierbei in einen Gasbeton-Baustoff eingebracht. Die Fig. 7 zeigt einen vormontierten Zustand, bei welchem der Dübel in die Bohrung 14 eingesteckt ist. Es ist hierbei insbesondere ersichtlich, daß die einzelnen Keilelemente 5 nach innen verschwenkt sind und im wesentlichen den gesamten Innenraum des zylindrischen Rohres einnehmen. Durch das in Fig. 8 gezeigte vollständige Einbringen des Spreizelements 3 werden die Keilelemente 5 nach außen verschwenkt und dringen in den porösen Werkstoff des Gasbetons 18 ein, so daß der Dübel formschlüssig verankert wird.

Der erfindungsgemäße Dübel kann auch in eine Bohrung eingesetzt werden, welche in Beton eingebracht ist. Beim Einbringen des Spreizelementes erfolgt ein Fließen des Materials der Keilelemente 5 in seitlicher und stirnseitiger Richtung sowie in den Toleranzbereich zwischen der Innenwandung des zylindrischen Rohrs 1 und dem Spreizelement 3. Der Dübel kann somit auch mit einer sogenannten Null-Toleranz montiert werden. Es erfolgt hierbei im wesentlichen lediglich eine kraftschlüssige Verankerung des Dübels.

## Patentansprüche

1. Dübel mit einem zylindrischen Rohr (1), welches einen spreizbaren Endbereich (2) aufweist und in welches ein im wesentlichen stabartiges Spreizelement (3) einbringbar ist, wobei das Rohr (1) seitliche Ausnehmungen (4) aufweist, in welchen jeweils ein Keilelement (5) schwenkbar gelagert ist, dadurch gekennzeichnet, daß die Ausnehmungen (4) nur auf zwei einander gegenüberliegenden Seiten des Dübels (1) angeordnet sind und jeweils, bezogen auf die Längsachse des Rohres (1), gegeneinander versetzt sind, daß die Innenfläche (7) des Keilelementes (5) in unbelastetem Zustand der Wandung des Rohres (1) parallel und im wesentlichen mit dessen Innenkontur bündig ist, daß bei nicht eingeschobenem Spreizelement das Keilelement im wesentlichen vollständig innerhalb der Außenkontur des Rohres (1) in dieses einschwenkbar ist und daß das Keilelement (5) in dem eingeschwenkten, nicht über die Außenkontur des Rohres (1) überstehenden Zustand den der Ausnehmung (4) zugeordneten Bereich ein Rohr (1) im wesentlichen vollständig ausfüllt.

2. Dübel nach Anspruch 1, dadurch gekennzeichnet, daß das Keilelement (5), bezogen auf eine die Längsachse des Rohres (1) umfassende Ebene, dreieckförmig ist.

3. Dübel nach Anspruch 2, dadurch gekennzeichnet, daß das Keilelement (5) im gespreizten Zustand eine zu der Längsachse des Rohres (1) rechtwinklige, zu dem Kopf (8) des Dübels weisende Oberfläche (9) und eine zu dieser Längsachse geneigte Außenfläche (10) aufweist.

4. Dübel nach einem der Ansprüche 1 bis 3, dadurch gekennzeichnet, daß das Rohr (1) zum freien Ende des Dübels hin offen ist.

## Claims

1. A wall plug comprising a cylindrical tube (1) with an expandable end region (2), a substantially rod-shaped expansion member (3) being insertable into the said tube (1), the tube (1) having lateral recesses (4) in each of which a respective wedge member (5) is pivotably mounted, **characterised in that** the recesses (4) are only arranged on two opposite sides of the wall plug (1) and are each mutually offset with reference to the longitudinal axis of the tube (1), and the inner surface (7) of the wedge member (5) when in an unloaded state is parallel to the wall of the tube (1) and is substantially aligned with the inner surface of the said tube, and when no expansion member is inserted, the wedge member can be pivoted into the tube (1) to be substantially completely within the outline of the tube (1), and when pivoted in and not projecting beyond the outline of the tube (1) the wedge member (5) substantially completely fills that region [of] a tube (1) associated with the recess (4).

2. A wall plug according to claim 1, **characterised in that** the wedge member (5) is triangular with reference to a plane including the longitudinal axis of the tube (1).

3. A wall plug according to claim 2, **characterised in that** when in an expanded state the wedge member (5) has an upper surface (9) at right angles to the longitudinal axis of the tube (1) and facing towards the head (8) of the wall plug, and also has an outer surface (10) inclined towards the said longitudinal axis.

4. A wall plug according to one of claims 1 to 3, **characterised in that** the tube (1) is open towards the free end of the wall plug.

## Revendications

1. Cheville comprenant un tube cylindrique (1) qui présente une zone d'extrémité (2) expansible et dans lequel peut être inséré un élément d'expansion (3) essentiellement en forme de barreau, le tube (1) présentant des creux (4) latéraux dans chacun desquels est monté à pivotement un élément formant coin (5),
caractérisée en ce que les creux (4) sont disposés uniquement sur deux côtés opposés de la cheville (1) et sont chaque fois décalés par rapport à l'autre en se référant à l'axe longitudinal du tube (1),
en ce que la surface intérieure (7) de l'élément formant coin (5), à l'état non chargé, est parallèle à la paroi du tube (1) et est essentiellement en affleurement avec le contour intérieur du tube,
en ce que, quand l'élément d'expansion n'est pas inséré, l'élément formant coin peut pivoter pour pénétrer dans le tube (1) en venant essentiellement entièrement à l'intérieur du contour extérieur de ce tube (1)
et en ce que l'élément formant coin (5) dans l'état où il a pivoté et ne dépasse pas du contour extérieur du tube (1), remplit essentiellement entièrement ce tube (1) dans la zone associée aux creux (4).

2. Cheville selon la revendication 1, caractérisée en ce que l'élément formant coin (5), par rapport à un plan contenant l'axe longitudinal du tube (1), est de forme triangulaire.

3. Cheville selon la revendication 2, caractérisée en ce que l'élément formant coin (5), dans l'état expansé, présente une surface (9) à angle droit par rapport à l'axe longitudinal du tube (1) et dirigée vers la tête (8) de la cheville, et une surface extérieure oblique par rapport à cet axe longitudinal.

4. Cheville selon l'une des revendications 1 à 3, caractérisée en ce que le tube (1) est ouvert en direction de l'extrémité libre de la cheville.
